# EUROPÄISCHE PATENTSCHRIFT

(11) **EP 0 407 925 B1**
(45) Veröffentlichungstag und Bekanntmachung des Hinweises auf die Patenterteilung: **10.11.1993**
(21) Anmeldenummer: 90113009.6
(22) Anmeldetag: 07.07.1990
(51) Int. Cl.: C08J 11/06, C08L 101/00, C08K 7/02

(54) **Recycling-Kunststofformmasse**
Recycling synthetic resin composition
Composition de recyclage contenant des résines synthétiques

(30) Priorität: 11.07.1989 DE 3922740
(43) Veröffentlichungstag der Anmeldung: 16.01.1991
(73) Patentinhaber: BASF Aktiengesellschaft, 67063 Ludwigshafen (DE)
(72) Erfinder: König, Ulrich, Dr., D-6700 Ludwigshafen (DE); Gehrig, Heinz, Dr., D-6750 Kaiserslautern (DE)

(56) Entgegenhaltungen:
- DD-A- 125 979
- DD-A- 265 409
- FR-A- 2 086 303

## Beschreibung

Die Erfindung betrifft eine Recycling-Kunststofformmasse aus einem ungesättigten Polyesterharz und zerkleinertem Kunststoff-Abfall.

Verstärkte duroplastische Kunststoffe werden in steigendem Maße als Ersatz für Metall und Holz für die Herstellung von Bauteilen in der Automobil-, Elektro- und Haushaltgeräte-Industrie verwendet. Beispiele dafür sind Karosserieteile, Scheinwerferreflektoren, Luftansaugkrümmer, Wasserpumpen, Blattfedern und Lenksäulen von Automobilen; Kühlschrankgehäuse, Staubsauger, Elektrogeräte, Briefkästen, Telefonhäuschen, ferner Leiterplatten und elektronische Bauteile. Wegen der begrenzten Lebensdauer der Geräte bereitet die Beseitigung bzw. Verwertung der Kunststoff-Bauteile Probleme. Bauteile aus thermoplastischen Kunststoffen können grundsätzlich durch Aufschmelzen aufgeschlossen und wiederverwendet werden; dies ist bei Duroplasten, z.B. aus ungesättigten Polyesterharzen, nicht moglich. Derartige Abfälle wurden bisher auf Deponien gelagert oder verbrannt, Recycling wurde bisher nicht praktiziert. Die beiden genannten Methoden zur Entsorgung von Kunststoff-Abfällen sind aber nicht befriedigend.

Die DD-A 125 979 beschreibt ein Verfahren zur Nutzung venetzter Polyesterharzabfälle, bei dem die Abfälle auf eine Korngröße von 1 bis 500 µm, vorzugsweise von 1 bis 20 µm, zermahlen und vernetzungsfähigem Polyesterharz zugesetzt werden. Vom Einsatz gröberer Partikel wird abgeraten, da mit zunehmender Korngröße die gleichmäßige Dispergierung der unterzumischenden Teilchen erschwert wird und die wirksame Oberfläche abnimmt, was wiederum ungünstige Eigenschaften der aus den Mischungen hergestellten Erzeugnisse verursachen soll. Von einem Herauspräparieren einzelner Glasfasern bei der Zerkleinerung ist nicht die Rede. Es hat sich gezeigt, daß derart feinstzermahlene Partikel aber nur als Füllstoff wirken; eine Verstärkungswirkung, feststellbar durch verbesserte mechanische Eigenschaften an ausgehärteten Fertigteilen, tritt nicht auf.

Der Erfindung lag daher die Aufgabe zugrunde, einen Weg zur Verwertung von Abfällen aus faserverstärkten Polyesterharzen aufzuzeigen.

Diese Aufgabe wird dadurch gelost, daß man die Kunststoff-Abfälle in zerkleinerter Form ungesättigten Polyesterharzen zusetzt. Gegenstand der Erfindung ist demzufolge eine Recycling-Kunststofformmasse, bestehend aus
A. 10-50 Gew.-% eines ungesättigten Polyesterharzes,
B. 5-80 Gew.-% zerkleinerten Kunststoff-Abfalls aus vernetztem Polyesterharz, Verstärkungsfasern und gegebenenfalls Füllstoffen,
C. 0-50 Gew.-% eines inerten Füllstoffs,
D. 0-20 Gew.-% üblicher Kunstharz-Additive.

Ein weiterer Gegenstand der Erfindung ist ein Verfahren zur Verwertung von Kunststoffabfall aus vernetztem Polyesterharz, Glasfasern und gegebenenfalls Füllstoffen durch Zerkleinern von Abfallteilen und Vermischen mit härtbarem ungesattigtem Polyesterharz, bei dem man die Abfallteile zunächst grob zerkleinert und dann so zerschlägt, daß einzelne Glasfasern herauspräpariert werden und daneben Kunststoff-Staub anfällt, wobei die Fasern noch weitgehend von Kunststoff umhüllt sind, und schließlich die zerkleinerten Abfall-Partikel ungesättigtem Polyesterharz zusetzt.

Ungesättigte Polyesterharze liegen im allgemeinen als Lösungen von 80 bis 40 Gew.-% ungesättigter Polyester in 20 bis 60 Gew.-% eines copolymerisierbaren Monomeren vor. Die Polyester sind Kondensationsprodukte aus mehrwertigen, insbesondere zweiwertigen Carbonsäuren und deren veresterbaren Derivaten, insbesondere deren Anhydride, die mit mehrwertigen, insbesondere zweiwertigen Alkoholen esterartig verknüpft sind, und gegebenenfalls zusätzliche Rest einwertiger Carbonsäuren oder einwertiger Alkohole enthalten, wobei zumindest ein Teil der Einsatzstoffe über ethylenisch ungesättigte, copolymerisationsfähige Gruppen verfügen muß. Als copolymerisierbare, ethylenisch ungesättigte monomere Verbindungen kommen die üblichen Allyl- und Vinylverbindungen in Frage, vorzugsweise Styrol.

Der zerkleinerte Kunststoff-Abfall B besteht im wesentlichen aus ver- netztem Polyesterharz, Verstärkungsfasern und gegebenenfalls Füllstoffen und weiteren Additiven. Daneben können auch - je nach Herkunft des Abfalls - untergeordnete Mengen thermoplastische Kunststoffe, Reste von elastischen Werkstoffen, z.B. Gummi, ferner Holz-, Pappe-, Papier- und Metallpartikel enthalten sein. Im allgemeinen hat der Abfall folgende Zusammensetzung:
20-80 Gew.-% vernetztes Polyesterharz,
10-40 Gew.-% Fasern, z.B. Glasfasern,
0-70 Gew.-% Füllstoffe, z.B. Kreide.

Diese Bauteile werden zunächst mit Schneidmühlen oder Prallmühlen grob zerkleinert, dann werden daraus die erfindungsgemäß eingesetzten Kunststoff-Abfall-Partikel hergestellt. Es hat sich gezeigt, daß solche Partikel besonders geeignet sind, die auf definierte Weise zerkleinert wurden. Dabei werden bevorzugt schlagende Maschinen, insbesondere Hammermühlen oder Rotormühlen eingesetzt. Bei dieser Art der Zerkleinerung werden die Glasfasern verhältnismäßig wenig geschädigt. Die Bruchzonen verlaufen im wesentlichen parallel zu den Verstärkungsfasern, so daß längliche Faserbüschel entstehen, die durch Kunststoff zusammengehalten sind. Auch wenn das Zerschlagen soweit getrieben wurde, daß einzelne Fasern herauspräpariert sind und daneben Kunststoff-Staub anfällt, sind die Fasern erstaunlich unbeschädigt und immer noch weitgehend von Kunststoff umhüllt.

Vorzugsweise besteht das Mahlgut also aus länglichen Teilchen mit einer mittleren Länge von maximal 20 mm, vorzugsweise zwischen 1 und 10 mm.

Das Mahlgut enthält im allgemeinen 5 bis 20 Gew.-% Staubanteil mit einer Korngröpe von weniger als 0,07 mm.

Der Kunststoff-Abfall ist in der erfindungsgemäpen Formmasse in Mengen von 5 bis 80, vorzugsweise von 10 bis 60 Gew.-% enthalten.

Die Formmasse kann 0 bis 50 Gew.-% eines inerten Füllstoffs C zugemischt enthalten. Dabei ist Kreide bevorzugt. Daneben kommen auch Kurzglasfasern, Quarzsand, Kaolin, Aluminiumoxidhydrat, Kieselgel, Metallpulver und Holzmehl in Frage.

Ferner kann die Formmasse 0 bis 20 Gew.-% üblicher Kunstharz-Additive D, wie Härter, Beschleuniger, Stabilisatoren, Farbstoffe, Inhibitoren oder Gleitmittel enthalten.

Diese Ausgangsmaterialien werden auf üblichen Mischaggregaten, beispielsweise auf Zweiwellen-Knetern, Walzenpaaren oder in Rührgefäßen vermischt. Je nach Feststoffgehalt entsteht eine trockene sauerkrautartige Masse, die nach dem BMC-Verfahren weiterverarbeitet wird, oder eine pumpfähige Masse, die nach dem SMC-Verfahren weiterverarbeitet wird.

Die Weiterverarbeitung zu Formteilen nach dem BMC-Verfahren kann auf üblichen Pressen vorgenommen werden. Je nach Art des zugesetzten Härtersystems kann kalt oder heiß (vorzugsweise bei 80 bis 150°C) verprept werden, wobei die Masse verformt und gehärtet wird. Wenn das Schüttgewicht des Kunststoff-Abfalls sehr niedrig, z.B. weniger als 0,2 g/cm³ ist, empfiehlt sich ein kaltes Vorpressen vor dem Aushärten, um Luft zu verdrängen.

Bei der Weiterverarbeitung nach dem SMC-Verfahren wird die pumpfähige Masse zusammen mit weiterem Polyesterharz, Initiator, Füllstoffen, Glasfasern und üblichen Eindickmitteln, z.B. Magnesiumoxid, zu einem eindickfähigen, flächigen Halbzeug (SMC) geformt. Dazu wird vorzugsweise auf eine Trägerfolie erst eine Harzpaste aufgetragen, die härtbares Polyesterharz, Initiator, Füllstoffe, Eindickmittel und gegebenenfalls weitere Additive enthält. Dann werden geschnittene Glasfaserrovings aufgestreut und danach wird die pumpfähige Recycling-Kunststofformmasse aus quer oszillierenden Austragsdüsen mittels einer Dosierpumpe ausgetragen. Daran kann sich noch einmal der Auftrag von Glasfasern und Harzpaste auf einer Oberfolie ausschliepen. Schlieplich wird die Masse auf einer konventionellen Walkstrecke z.B. mittels Walzen homogenisiert. Die entstandene flächige SMC-Masse wird dann in üblicher Weise eingedickt.

Das Halbzeug kann - wieder nach bekannten Methoden - zu Formteilen verpreßt und gehärtet werden.

Die aus den erfindungsgemäßen Recycling-Formmassen hergestellten Teile können mit Vorteil auf solchen Gebieten eingesetzt werden, wo das äußere Bild keine Rolle spielt und keine allzu hohen Anforderungen an die mechanischen Eigenschaften gestellt werden. Beispiele dafür sind Eisenbahnschwellen, Paletten, Schachtauskleidungen, Werkzeugschränke, Abdeckungen, Lichtschächte sowie Automobilteile, die nicht sichtbar sind.

Die in den Beispielen genannten Teile und Prozente beziehen sich auf das Gewicht.

### Beispiel 1

Folgende Mischung wurde hergestellt:
100 Teile eines ungesättigten Polyesterharzes auf Basis Maleinsäure, ortho-Phthalsäure, Propylenglykol und Dipropylenglykol, mit 35 % Styrol,
180 Teile Kreide,
20 Teile SMC-Abfall (glasfaserverstärktes, kreidegefülltes ausgehärtetes Polyesterharz, so zerkleinert, daß es 10 % Anteile unter 0,07 mm und 55 % Anteile über 0,5 mm aufweist),
4 Teile Zinkstearat,
1,5 Teile tert.-Butylperbenzoat.

Die Masse wurde 10 min in einem Zweiwellenkneter gemischt, dann wurden 60 Teile Kurzglasfasern zugesetzt und weitere 5 min geknetet.

Das Halbzeug wurde 10 min lang bei 150°C und 20 kp/cm² in einer Plattenform zu einer 4 mm dicken Platte verpreßt. Aus dieser Platte wurden Prüfkörper ausgesägt, an denen folgende Eigenschaften gemessen wurden:
- Biegefestigkeit: 121 N/mm
- Biege-E-Modul: 11,4 KN/mm

### Beispiel 2

Wie in Beispiel 1 wurde eine Mischung hergestellt aus:
100 Teilen eines ungesättigten Polyesterharzes auf Basis Maleinsäure, Isophthalsäure, Propylenglykol und Diethylenglykol, 35 %ig in Styrol,
250 Teile SMC-Abfälle wie in Beispiel 1,
4 Teile Zinkstearat,
1,5 Teile tert.-Butylperbenzoat.

Die Mischung wurde in 3 Chargen in einem 5-l-Kneter verarbeitet. Die entstandene praktisch trockene Masse wurde über Nacht in einem Polyethylenbeutel stehen gelassen, dann 5 min bei 150°C gehärtet.

## Patentansprüche

1. Recycling-Kunststofformmasse, bestehend aus
A. 10-50 Gew.-% eines ungesättigten Polyesterharzes,
B. 5-80 Gew.-% zerkleinerten Kunststoff-Abfalls aus vernetztem Polyesterharz, Verstärkungsfasern und gegebenenfalls Füllstoffen,
C. 0-50 Gew.-% eines inerten Füllstoffes,
D. 0-20 Gew.-% üblicher Kunstharz-Additive,
dadurch gekennzeichnet, daß der Kunststoff-Abfall mehr als 50 Gew.-% längliche, kunststoffumhüllte Faserbüschel einer Länge von mehr als 0,5 mm enthält.

2. Recycling-Kunststofformmasse nach Anspruch 1, dadurch gekennzeichnet, daß der Kunststoff-Abfall aus länglichen oder blättchenförmigen Teilchen mit einer mittleren Länge von maximal 20 mm besteht.

3. Recycling-Kunststofformmasse nach Anspruch 1, dadurch gekennzeichnet, daß der Kunststoff-Abfall 5 bis 20 Gew.-% Staubanteile mit einer Korngröße von weniger als 0,07 mm enthält.

4. Recycling-Kunststofformasse nach Anspruch 1, dadurch gekennzeichnet, daß der Kunststoff-Abfall folgende Zusammensetzung hat:
20-80 Gew.-% vernetztes Polyesterharz,
10-40 Gew.-% Fasern,
0-70 Gew.-% Füllstoff.

5. Verfahren zur Herstellung der Recycling-Kunststofformmasse nach Anspruch 1, dadurch gekennzeichnet, daß die Ausgangsmaterialien auf üblichen Mischaggregaten vermischt werden.

6. Verfahren zur Verarbeitung der Recycling-Kunststofformmasse nach Anspruch 1, dadurch gekennzeichnet, daß eine teigige Formmasse in Pressen verformt und bei erhöhten Temperaturen gehärtet wird.

7. Verfahren zur Verarbeitung der Recycling-Kunststofformmasse nach Anspruch 1, dadurch gekennzeichnet, daß man eine pumpfähige Formmasse zusammen mit weiterem Polyesterharz, Initiator, Eindickmittel, Füllstoffen und Glasfasern zu einem flächigen Halbzeug formt, dieses eindickt und bei erhöhten Temperaturen verpreßt und aushärtet.

8. Verfahren zur Verwertung von Kunststoffabfall aus vernetztem Polyesterharz, Glasfasern und gegebenenfalls Füllstoffen durch Zerkleinern von Abfallteilen und Vermischen mit härtbarem ungesättigtem Polyester- harz, dadurch gekennzeichnet, daß man die Abfallteile zunächst grob zerkleinert und dann so zerschlägt, daß einzelne Glasfasern herauspräpariert werden und daneben Kunststoff-Staub anfällt, wobei die Fasern noch weitgehend von Kunststoff umhüllt sind, und schließlich die zerkleinerten Abfall-Partikel ungesättigtem Polyesterharz zusetzt.

9. Verfahren zur Verwertung von Kunststoffabfall nach Anspruch 8, dadurch gekennzeichnet, daß die herauspräparierten Glasfaserpartikel eine Länge von mehr als 0,5 mm aufweisen.

## Claims

1. A molding material comprising
A. 10-50% by weight of an unsaturated polyester resin,
B. 5-80% by weight of comminuted plastics waste comprising crosslinked polyester resin and reinforcing fibers with or without fillers,
C. 0-50% by weight of an inert filler,
D. 0-20% by weight of customary synthetic resin additives,
characterized in that the plastics waste comprises more than 50% by weight of elongate, plastics-coated fiber bundles more than 0.5 mm in length.

2. A molding material as claimed in claim 1, characterized in that the plastics waste comprises elongate or flaky particles having an average length of not more than 20 mm.

3. A molding material as claimed in claim 1, characterized in that the plastics waste comprises from 5 to 20% by weight of dust having a particle size of less than 0.07 mm.

4. A molding material as claimed in claim 1, characterized in that the plastics waste has the following composition:
20-80% by weight of crosslinked polyester resin,
10-40% by weight of fibers,
0-70% by weight of filler.

5. A process for preparing the molding material of claim 1, characterized in that the starting materials are mixed in customary mixing apparatus.

6. A method for processing the molding material of claim 1, characterized in that a doughy molding material is press molded and cured at elevated temperatures.

7. A method for processing the molding material of claim 1, characterized in that a pumpable molding material is combined with further polyester resin, initiator, thickener, fillers and glass fibers to form a sheet molding compound, and this compound is thickened and then compression molded and cured at elevated temperatures.

8. A process for recycling plastics waste comprising crosslinked polyester resin and glass fibers with or without fillers by comminuting waste components and mixing with curable unsaturated polyester resin, characterized in that the waste components are first coarsely comminuted and then beaten to such an extent that individual glass fibers are isolated and plastics dust is produced as well, the fibers still being substantially plastics-coated, and finally the comminuted waste particles are added to unsaturated polyester resin.

9. A process for recycling plastics waste as claimed in claim 8, characterized in that the isolated glass fiber particles have a length of more than 0.5 mm.

## Revendications

1. Masse de matière plastique de recyclage, se composant de
A. 10-50% en poids d'une résine de polyester insaturé,
B. 5-80% en poids de déchets de matière plastique broyés, composés de résine de polyester réticulé, de fibres de renforcement et éventuellement de charges,
C. 0-50% en poids d'une charge inerte,
D. 0-20% en poids d'additifs usuels pour résines synthétiques,
caractérisée en ce que les déchets de matière plastique contiennent plus de 50% en poids de flocons de fibres de forme allongée, engainés de matière plastique, ayant une longueur de plus de 0,5 mm.

2. Masse de matière plastique de recyclage selon la revendication 1, caractérisée en ce que les déchets de matière plastique se composent de particules de forme allongée ou lamellaire, ayant une longueur moyenne de 20 mm au maximum.

3. Masse de matière plastique de recyclage selon la revendication 1, caractérisée en ce que les déchets de matière plastique contiennent 5 à 20% en poids de poussière ayant une grosseur de grain de moins de 0,07 mm.

4. Masse de matière plastique de recyclage selon la revendication 1, caractérisée en ce que les déchets de matière plastique ont la composition suivante:
20-80% en poids de résine de polyester réticulé,
10-40% en poids de fibres,
0-70% de charge.

5. Procédé de préparation de la masse de matière plastique de recyclage selon la revendication 1, caractérisé en ce que les matières de départ sont mélangées dans des groupes mélangeurs usuels.

6. Procédé de transformation de la masse de matière plastique de recyclage selon la revendication 1, caractérisé en ce qu'une masse à mouler pâteuse est moulée à la presse et est durcie à température élevée.

7. Procédé de transformation de la masse de matière plastique de recyclage selon la revendication 1, caractérisé en ce qu'on transforme en produit semi-fini en nappe une masse à mouler pompable, en même temps qu'une quantité supplémentaire de résine de polyester, un amorceur, un épaississant, des charges et des fibres de verre, on épaissit ce produit et on le presse et le durcit à température élevée.

8. Procédé de réutilisation de déchets de matière plastique composés de résine de polyester réticulé, de fibres de verre et éventuellement de charges, par broyage des fragments de déchets et mélange avec une résine de polyester insaturé durcissable, caractérisé en ce qu'on commence par broyer grossièrement les fragments de déchets, puis on les brise à coups de marteau de sorte que des fibres de verre individuelles soient préparées à l'état dégagé et qu'il soit formé, à côté d'elles, de la poussière de matière plastique, les fibres étant encore engainées de matière plastique dans une large mesure, et on ajoute enfin les particules de déchets broyées à la résine de polyester insaturé.

9. Procédé de réutilisation de déchets de matière plastique selon la revendication 8, caractérisé en ce que les particules de fibres de verre préparées à l'état dégagé présentent une longueur de plus de 0,5 mm.
